# EUROPÄISCHE PATENTANMELDUNG

(11) **EP 4 841 513 A1**
(43) Veröffentlichungstag der Anmeldung: **18.11.2026**
(21) Anmeldenummer: 25176695.2
(22) Anmeldetag: 15.05.2025
(51) Int. Cl.: G06N 3/084, G06N 3/0895

(54) **VERFAHREN ZUM TRAINIEREN EINES MASCHINELLEN LERNSYSTEMS**

(71) Anmelder: Robert Bosch GmbH, 70442 Stuttgart (DE)
(72) Erfinder: Wagner, Nick, 70806 Kornwestheim (DE); Ebert, Jasmin, 69126 Heidelberg (DE); Wimmer, Paul, 73550 Waldstetten (DE); Yatsura, Maksym, 72280 Dornstetten (DE)

(57) **Zusammenfassung**

Die Erfindung betrifft ein computerimplementiertes Verfahren zum Trainieren eines Maschinellen Lernsystems, unter Verwendung von Referenzdaten wobei, die Referenzdaten. Raumbelegungsdaten umfassen, wobei die Raumbelegungsdaten eine Menge von Raumbelegungseinheiten umfassen, wobei das Maschinelle Lernsystem basierend auf Eingangsdaten Prädiktionen ausgibt, wobei die Eingangsdaten Sensordaten sind, wobei die Prädiktionen in einen Referenzraum der Raumbelegungsdaten projiziert werden um Projizierte-Prädiktionen zu erhalten, wobei eine Abbildung der Projizierten-Prädiktionen auf die Raumbelegungsdaten erfolgt, wobei ein Fehler der Projizierten-Prädiktionen zu den Raumbelegungsdaten mittels einer Fehlerfunktion berechnet wird, wobei das Maschinelle Lernsystem basierend auf dem Fehler optimiert wird. Außerdem betrifft die Erfindung eine Vorrichtung und ein Computerprogramm.

## Beschreibung

Die Erfindung betrifft ein computerimplementiertes Verfahren zum Trainieren eines Maschinellen Lernsystems. Außerdem betrifft die Erfindung eine Vorrichtung und ein Computerprogramm.

### Stand der Technik

Die Verfügbarkeit von Referenzdaten für das Training Maschineller Lernsystem ist von entscheidender Bedeutung. Aktuelle Methoden nutzen als Referenzdaten manuell annotierte Daten oder Daten mit automatisch generierten Annotationen. Beide Methoden beziehen sich dabei darauf, Sensordaten mit Annotationen zu versehen, um diese für das Training zu nutzen. Ein Nachteil besteht hierbei darin, dass das manuelle Annotieren von Daten ein kostenintensiver und zeitaufwendiger Prozess ist, wohingegen automatisch generierten Annotationen oft von geringer Präzision sind und die Generierung ebenfalls kosten- und ressourcenintensiv ist.

Somit ergibt sich der Bedarf für ein Verfahren zum Trainieren eines Maschinellen Lernsystems, unter Verwendung von Referenzdaten, das sowohl kosteneffizient und zeiteffizient ist als auch präzise Annotation liefert.

### Offenbarung der Erfindung

Das erfindungsgemäße Verfahren zum Trainieren eines Maschinellen Lernsystems unter Verwendung von Referenzdaten hat demgegenüber den Vorteil, dass die Referenzdaten Raumbelegungsdaten umfassen, wobei die Raumbelegungsdaten eine Menge von Raumbelegungseinheiten umfassen, wobei das Maschinelle Lernsystem basierend auf Eingangsdaten Prädiktionen ausgibt, wobei die Eingangsdaten Sensordaten sind, wobei die Prädiktionen in einen Referenzraum der Raumbelegungsdaten projiziert werden um Projizierte-Prädiktionen zu erhalten, wobei eine Abbildung der Projizierten-Prädiktionen auf die Raumbelegungsdaten erfolgt, wobei ein Fehler der Projizierten-Prädiktionen zu den Raumbelegungsdaten mittels einer Fehlerfunktion berechnet wird, wobei das Maschinelle Lernsystem basierend auf der Fehlerfunktion optimiert wird.

Unter einem maschinellen Lernsystem versteht man insbesondere ein computergestütztes System, das Algorithmen und Modelle verwendet, um aus Daten zu lernen und basierend darauf beispielsweise Vorhersagen oder Entscheidungen zu treffen sowie insbesondere Aktuatoren anzusteuern. Das Maschinelle Lernsystem kann beispielsweise ein künstliches neuronales Netzwerk sein. In einer bevorzugten Ausführungsform ist das Maschinelle Lernsystem insbesondere ein tiefes neuronales Netzwerk.

Trainieren eines Maschinellen Lernsystems kann im Kontext des erfindungsgemäßen Verfahrens insbesondere, einen Prozess einer Anpassung von Modellparametern eines Maschinellen Lernsystems umfassen, um dessen Fähigkeit zu verbessern, basierende auf Eingangsdaten Prädiktionen zu treffen. Dabei können die Eingangsdaten insbesondere Sensordaten sein. Dabei versteht man unter Prädiktionen insbesondere Ausgaben des Maschinellen Lernsystems, die basierend auf Eingangsdaten generiert werden und insbesondere Schätzungen oder Vorhersagen beispielsweise über einen Zustand, ein Ereignis oder eine Größe repräsentieren. Während des Trainings wird dem Maschinellen Lernsystem ein Datensatz präsentiert, der insbesondere aus Eingangsdaten und entsprechenden Referenzdaten besteht. Das Maschinelle Lernsystem lernt, die Beziehung zwischen Eingangsdaten und Referenzdaten zu modellieren, indem insbesondere seine internen Modellparameter basierend auf einem berechneten Fehler der Prädiktionen zu den Referenzdaten angepasst werden.

Sensordaten können insbesondere eine einzelne Messung von einem Sensor, aber auch eine Reihe von Messungen und/oder Messwertpaare, beispielsweise einen Messwert und einen Zeitstempel, umfassen. Die Sensordaten können insbesondere von einem physikalischen Sensor stammen, der direkt eine physikalische Größe misst. Beispiele für physikalische Sensoren sind Bildsensoren, Radarsensoren, Lidarsensoren, Beschleunigungssensoren und/oder andere Geräte, die reale Phänomene erfassen. Alternativ oder zusätzlich können die Sensordaten von einem synthetischen Sensor stammen werden. Ein synthetischer Sensor bezieht sich insbesondere auf einen Berechnungsprozess und/oder ein Modell, das Daten generiert, die Sensordaten nachbilden, jedoch ohne direkte physikalische Messung. Beispiele für synthetische Sensoren sind Simulationen, generative Modelle und/ oder Datenaugmentationstechniken.

Unter Referenzdaten versteh man insbesondere Daten, die als Sollwerte für das Trainieren des Maschinellen Lernsystems dienen. Referenzdaten werden beispielsweise durch manuelles oder automatisiertes Annotieren von Sensordaten erstellt. Sie repräsentieren insbesondere erwartete Ausgaben des Systems für gegebene Eingangsdaten und werden insbesondere verwendet, um den Fehler der Prädiktionen zu den Referenzdaten während des Trainings zu bestimmen und die Modellparameter des Maschinellen Lernsystems anzupassen. Die Referenzdaten könne insbesondere Punkte, Boxen und/ oder Polygone umfassen. Erfindungsgemäß werden insbesondere alternativ oder zusätzlich zu bereits vorhanden Referenzdaten Raumbelegungsdaten als Referenzdaten genutzt.

Raumbelegungsdaten klassifizieren insbesondere Bereiche in einem Raum anhand bestimmter Kriterien. Diese Kriterien können beispielsweise die Präsenz von Objekten, die Zugehörigkeit zu semantischen Klassen (beispielsweise Straße, Gebäude, Vegetation), die Abgrenzung von Objekten durch Angabe ihrer Position und Ausdehnung (beispielsweise Bounding Boxes, Polygone), oder andere Eigenschaften einer Umgebung betreffen. Dabei klassifizieren die Raumbelegungsdaten insbesondere den gesamten Raum, da auch nicht belegte Bereiche implizit klassifiziert sind. Die Raumbelegungsdaten können verschiedene Formen annehmen, wie beispielsweise diskrete Belegungsgitter, kontinuierliche Wahrscheinlichkeitsverteilungen, Bounding Boxes, Polygone oder Instanzsegmentierungen. Dabei wird insbesondere jeder Bereich im Raum durch zumindest eine Raumbelegungseinheit klassifiziert, wobei die Raumbelegungseinheit zumindest einen Wert eines Kriteriums für diesen Bereich des Raums umfasst.

Ein Referenzraum ist insbesondere ein Raum, in dem die Raumbelegungsdaten durch die Raumbelegungseinheiten abgebildet sind. In einer vorteilhaften Ausführungsform umfasst der Referenzraum insbesondere eine diskrete Gitterstruktur. Die Prädiktionen des Maschinellen Lernsystems werden insbesondere in den Referenzraum projiziert, wodurch sich Projizierte-Prädiktionen ergeben. Auf den Projizierten-Prädiktionen findet insbesondere eine Abbildung der Prädiktionen auf die Raumbelegungsdaten statt. Bei der Abbildung der Projizierte-Prädiktionen zu den Raumbelegungsdaten, kann insbesondere jede Projizierte-Prädiktion zumindest einer Raumbelegungseinheit zugeordnet werden. Die Abbildung erfolgt mittels einer Strategie die insbesondere abhängig von einer Art der Prädiktionen (beispielsweise Punkte, Boxen, Polygone), einer Art der Raumbelegungsdaten (beispielsweise semantische Segmentierung, Instanzsegmentierung), einer Art des Referenzraums (beispielsweise diskrete Gitterstruktur, kontinuierliche Wahrscheinlichkeitswerte) sowie weiteren möglicherweise vorhandenen Attributen in den Prädiktionen und/oder Raumbelegungsdaten (beispielsweise Geschwindigkeiten, Richtungen). Beispiele für Strategien für die Abbildung sind insbesondere Zuordnungen von Prädiktionen, die ein Objekt im Raum beschreiben zu Raumbelegungseinheiten, welche einen belegten Raum ausdrücken.

Basierend auf der Abbildung wird insbesondere ein Fehler mittels einer Fehlerfunktion berechnet, der beispielsweise eine Abweichung der Projizierten-Prädiktionen zu den Raumbelegungsdaten ausdrückt. Daraufhin werden insbesondere die Modellparameter des Maschinellen Lernsystems basierend auf der Fehlerfunktion optimiert, um den Fehler zu minimieren. Typische Verfahren sind hier beispielsweise Backpropagation oder Gradientenabstieg.

Das Trainieren eines Maschinellen Lernsystems unter Verwendung von Raumbelegungsdaten als Referenzdaten ist insbesondere vorteilhaft, wenn wenige andere Referenzdaten vorhanden sind oder das Trainieren durch weitere Referenzdaten verbessert werden soll, insbesondere wenn die Raumbelegungsdaten bereits aus eine anderen Prozessschritt vorhanden sind. Dabei ist besonders vorteilhaft, dass die Raumbelegungsdaten mit Hilfe der Abbildung der Projizierten-Prädiktionen auf die Raumbelegungsdaten direkt in einen existierenden Trainingsprozess integriert werden können und zusammen mit anderen Referenzdaten für das Trainieren eines Maschinellen Lernsystems genutzt werden können. Dadurch ist insbesondere keine tiefgreifende Anpassung des existierenden Trainingsprozesses notwendig.

Durch die in den abhängigen Ansprüchen aufgeführten Ausgestaltungen sind vorteilhafte Weiterbildungen und Verbesserungen des im unabhängigen Anspruch angebenden Verfahrens möglich.

In einer besonders vorteilhaften Ausführung ist die Fehlerfunktion ausgelegt, um Fehler von zumindest zwei Referenzdatenarten für eine Prädiktion zu berücksichtigen.

Unter Referenzdatenarten versteht man insbesondere Referenzdaten von verschiedenen Quellen (beispielweise manuell annotierte Referenzdaten, automatisch annotierte Referenzdaten und/ oder Raumbelegungsdaten, welche als Referenzdaten verwendet werden), die beispielsweise die gleiche Prädiktion beschreiben. Dabei wird insbesondere der Fehler der Prädiktion mit jeder Referenzdatenart separat ermittelt und anschließend in der Fehlerfunktion, beispielsweise durch Addition zusammengeführt. In einer vorteilhaften Ausführung werden die verschiedenen Referenzdatenarten durch optimierbare Gewichte, beispielsweise durch Multiplikation, gewichtet. Die Gewichte sind dabei insbesondere Hyperparameter, die in einem Optimierungsprozess angepasst werden können, um beispielsweise verschiedene Qualitätsstufen von Referenzarten zu berücksichtigen, so können beispielsweise Referenzdatenarten schlechterer Qualität schwächer gewichtet werden also Referenzdatenarten höherer Qualität.

Durch eine Verwendung verschiedener Referenzdatenarten, insbesondere für eine Prädiktion, kann das Trainieren des Maschinellen Lernsystems verbessert werden und Referenzdatenarten unterschiedlicher Qualität berücksichtigt werden. Durch eine Zusammenführung in der Fehlerfunktion kann das Verfahren einfach in einen existierenden Trainingsprozess integriert werden und um weitere Referenzdatenarten erweitert werden.

In einer vorteilhaften Ausführung umfassen die Referenzdaten weitere Attribute, wobei die weiteren Attribute statische Attribute und/ oder dynamische Attribute umfassen, wobei die weiteren Attribute für die Abbildung der Projizierte-Prädiktionen zu den Raumbelegungsdaten genutzt werden.

Statische Attribute sind insbesondere Attribute, die inhärente, zeitunabhängige Eigenschaften von Objekten oder Bereichen im Raum beschreiben. Beispiele für statische Attribute können, unter anderem, Form, Größe, Farbe, Materialeigenschaften oder eine Klassifizierung eines Bereichs sein.

Eine Nutzung statischer Attribute kann eine Genauigkeit der Abbildung der Projizierte-Prädiktionen zu den Raumbelegungsdaten verbessern, indem sie zusätzliche Informationen über Objekte und/ oder Bereiche liefert, die unabhängig von deren Bewegung oder Zustand sind.

Dynamische Attribute sind insbesondere Attribute, die den Zustand oder die Bewegung von Objekten oder Bereichen im Raum beschreiben und sich über die Zeit ändern können. Beispiele für dynamische Attribute können, unter anderem, Geschwindigkeit, Richtung, Beschleunigung oder zeitliche Veränderungen anderer Eigenschaften sein.

Eine Nutzung dynamischer Attribute kann eine zeitliche Konsistenz der Abbildung und/ oder eine Vorhersage von zukünftigen Zuständen unterstützen.

Weitere Attribute der Referenzdaten können insbesondere Raumbelegungseinheiten zugeordnet werden, wobei die weiteren Attribute beispielsweise mit Attributen der Prädiktionen abgeglichen werden können. Dabei werden insbesondere Attribute der Prädiktionen, die nicht in den Referenzdaten vorhanden sind, ignoriert und für die Abbildung nicht berücksichtigt.

In einer beispielhaften Ausführungsform können Geschwindigkeiten und Richtungen insbesondere für Objektverfolgungsalgorithmen genutzt werden.

In einer besonders vorteilhaften Ausführung umfassen die Raumbelegungsdaten für jede Raumbelegungseinheit zumindest einen Vertrauenswert, der insbesondere eine Zuverlässigkeit einer jeweiligen Raumbelegungseinheit angibt, und wobei Raumbelegungseinheiten, deren Vertrauenswert unterhalb eines vorbestimmten Schwellwerts liegt, für die Abbildung der Projizierten Prädiktionen mit den Raumbelegungsdaten ignoriert werden.

Ein Vertrauenswert gibt insbesondere die Zuverlässigkeit einer jeweiligen Raumbelegungseinheit an. Ein hoher Vertrauenswert bedeutet, dass eine Information über die Belegung der entsprechenden Raumbelegungseinheit als zuverlässig erachtet wird, während ein niedriger Vertrauenswert eine geringere Zuverlässigkeit impliziert. Der Vertrauenswert kann beispielsweise eine Ausgansgröße eines Maschinellen Lernsystems sein, welches zur Erstellung der Raumbelegungsdaten genutzt wird und kann insbesondere auf einer Qualität von Sensordaten, einer Unsicherheit von Messungen und/ oder einer Konsistenz von Informationen aus verschiedenen Sensoren basieren. Um den Einfluss Raumbelegungseinheiten mit niedriger Zuverlässigkeit auf das Training des Maschinellen Lernsystems zu minimieren, werden insbesondere Raumbelegungseinheiten, deren Vertrauenswert unterhalb eines vorbestimmten Schwellwerts liegt, für die Abbildung der projizierten Prädiktionen mit den Raumbelegungsdaten ignoriert. Dieser Schwellwert kann insbesondere basierend auf Anforderungen einer Anwendung und/ oder unter Berücksichtigung von Expertenwissen angepasst werden. Alternativ oder zusätzlich können Optimierungsalgorithmen genutzt werden, um den Schwellwert zu optimieren. Durch die Verwendung von Vertrauenswerten und das Ignorieren unzuverlässiger Raumbelegungseinheiten kann die Robustheit und Genauigkeit des Trainings verbessert werden.

In einer vorteilhaften Ausführung wird der Fehler der Projizierten-Prädiktionen mit den Referenzdaten mit zumindest einem Ähnlichkeitsmaß, insbesondere Intersection over Union oder Dice-Loss, bestimmt.

Ein Ähnlichkeitsmaß quantifiziert insbesondere eine Übereinstimmung zwischen den projizierten Prädiktionen und den Raumbelegungsdaten. Ein hoher Wert des Ähnlichkeitsmaßes bedeutet beispielsweise eine hohe Übereinstimmung, während ein niedriger Wert auf eine geringe Übereinstimmung hindeutet. Wobei eine geringe Übereinstimmung insbesondere einem höheren Fehler entspricht. Eine Auswahl des Ähnlichkeitsmaßes hängt von einer Art der Prädiktionen und/ oder der Raumbelegungsdaten ab. Insbesondere können Methoden wie Intersection over Union (IoU), Dice-Loss oder andere geeignete Ähnlichkeitsmaße verwendet werden. Intersection over Union bestimmt das Verhältnis einer Schnittmenge zu einer Vereinigungsmenge der Projizierten-Prädiktionen und Raumbelegungsdaten, die einer entsprechenden Projizierten Prädiktion zugeordnet sind. Dice-Loss ist definiert als Eins minus des Dice-Koeffizienten, der eine Ähnlichkeit zwischen zwei Mengen misst. Die Verwendung eines Ähnlichkeitsmaßes ermöglicht eine quantitative Bewertung des Fehlers der Prädiktionen und dient als Grundlage für die Optimierung des Maschinellen Lernsystems.

In einer vorteilhaften Ausführung ist der Referenzraum der Raumbelegungsdaten gemäß einer Gitterstruktur aufgebaut, wobei die Gitterstruktur Gitterzellen umfasst, wobei jeder Gitterzelle zumindest eine Raumbelegungseinheit zugeordnet ist, wobei die Prädiktionen auf die Gitterzellen projiziert werden.

Eine Gitterstruktur umfasst insbesondere eine regelmäßige Anordnung von Gitterzellen, die den Referenzraum in diskrete Einheiten unterteilen. Jeder Gitterzelle ist zumindest eine Raumbelegungseinheit zugeordnet, die Informationen über die Belegung des entsprechenden Bereichs im Raum enthält. Die Prädiktionen des Maschinellen Lernsystems werden auf die Gitterzellen projiziert. Dies ermöglicht insbesondere einen direkten Vergleich zwischen den Prädiktionen und den Raumbelegungsdaten. Die Gitterstruktur des Referenzraums vereinfacht insbesondere durch seine diskrete Struktur die Abbildung zwischen den Prädiktionen und den Referenzdaten und ermöglicht eine effiziente Optimierung des Maschinellen Lernsystems.

In einer besonders vorteilhaften Ausführung, umfasst das Maschinelle Lernsystem ein Multitask-Netzwerk, wobei ein Teil des Multitask-Netzwerks die Raumbelegungsdaten bestimmt, wobei zumindest ein zweiter Teil des Multitask Netzwerks unter Verwendung der Raumbelegungsdaten trainiert wird.

Ein Multitask-Netzwerk ist insbesondere ein neuronales Netzwerk, das mehrere, insbesondere verschiedene, Aufgaben gleichzeitig bearbeitet. Dabei umfasst das Multitask-Netzwerk insbesondere zumindest zwei Pfade, wobei in einem ersten Pfad die Raumbelegungsdaten bestimmt werden. Dieser erste Pfad des Multitask-Netzwerks erhält insbesondere Eingangsdaten, beispielsweise Sensordaten, und generiert als Ausgabe die Raumbelegungsdaten, die eine Umgebung repräsentieren. Zumindest ein zweiter Pfad des Multitask-Netzwerks wird unter Verwendung der vom ersten Pfad generierten Raumbelegungsdaten trainiert. Dieser zweite Teil des Netzwerks erstellt insbesondere die Prädiktionen, was beispielsweise eine Erkennung und Klassifizierung von Objekten in einer Umgebung, eine Vorhersage von Bewegungen oder eine Planung von Aktionen umfasst. Durch die Verwendung der Raumbelegungsdaten als Referenzdaten im Trainingsprozess kann die Genauigkeit und Robustheit des zumindest zweiten Pfades verbessert werden.

Eine Nutzung der Raumbelegungsdaten als Referenzdaten ist hier besonders vorteilhaft, da sie im Rahmen des Multitask-Netzwerks im ersten Pfad insbesondere unabhängig vom Trainieren des zumindest zweiten Pfades generiert werden. Damit werden keine zusätzlichen Ressourcen für eine Generierung der Raumbelegungsdaten gebraucht. Die zumindest zwei Pfade müssen dabei insbesondere nicht gleichzeitig ausgeführt werden.

In einer Vorteilhaften Ausführung umfassen die Prädiktionen Polygone, wobei die Abbildung der Projizierten-Prädiktionen mit den Raumbelegungsdaten insbesondere basierend auf einer Erkennung von Änderungen in den Raumbelegungsdaten erfolgt.

Die Abbildung der projizierten Prädiktionen mit den Raumbelegungsdaten erfolgt in dieser Ausführungsform insbesondere basierend auf einer Erkennung von Änderungen in den Raumbelegungsdaten. Dieses Verfahren nutzt eine Information bezüglich Übergänge zwischen verschiedenen Bereichen und/ oder Klassen in den Raumbelegungsdaten, um Vergleichs-Polygone in den Raumbelegungsdaten zu positionieren und entlang von Übergängen von Bereichen anzupassen.

Vorteilhafterweise kann die Erkennung von Änderungen in den Raumbelegungsdaten durch Kantendetektionsalgorithmen erfolgen. Kantendetektionsalgorithmen identifizieren Übergänge entlang Bereichen im Referenzraum, in denen sich die Werte der Raumbelegungsdaten ändern, beispielsweise an Grenzen zwischen belegten und freien Bereichen und/ oder zwischen Bereichen unterschiedlicher semantischer Klassen. Erkannten Kanten können dann für eine Positionierung der Vergleichs-Polygone verwendet werden. Die Vergleichs-Polygone werden entlang der erkannten Kanten ausgerichtet. Die von den Prädiktionen umfassten Polygone werden entsprechend dem Fachmann bekannter Methoden mit dem Vergleichs-Polygonen verglichen, um den Fehler der Projizierten-Prädiktionen zu den Raumbelegungsdaten zu bestimmen.

Dieses Verfahren bietet insbesondere den Vorteil, dass die von den Prädiktionen umfassten Polygone präzise mit den Raumbelegungsdaten verglichen werden können, selbst wenn die Raumbelegungsdaten verrauscht oder unvollständig sind. Durch die Nutzung der Information über Änderungen in den Raumbelegungsdaten wird beispielsweise die Robustheit und Genauigkeit der Abbildung der Prädiktionen verbessert.

In einer besonders Vorteilhaften Ausführung, wird das Maschinellen Lernsystem, das mit einer Ausführungsform des erfindungsgemäßen Verfahrens trainiert wurde, verwendet, um einen Roboter zu steuern, wobei die Sensordaten insbesondere Lidardaten, Radardaten und/ oder Bilddaten sind.

Ein Roboter bezeichnet insbesondere ein autonomes und/ oder ferngesteuertes System mit Sensoren und Aktuatoren, das zur Interaktion mit seiner Umgebung eingesetzt wird. Beispiele für Roboter sind insbesondere Industrieroboter, Serviceroboter und autonome Fahrzeuge.

Lidardaten sind insbesondere dreidimensionale Punktdaten, die die Umgebung durch Abtasten mit Laserstrahlen erfassen. Sie liefern beispielsweise Informationen über Entfernungen, Positionen und/ oder Formen von Objekten.

Radardaten sind insbesondere Daten, die durch Aussenden von Radiowellen und Messen der reflektierten Signale gewonnen werden. Sie liefern beispielsweise Informationen über Entfernungen, Positionen und/ oder Formen von Objekten.

Bilddaten sind insbesondere zweidimensionale Daten, die von Bildsensoren mit einer Matrix aus photosensitiven Pixeln erfasst werden und die visuelle Wahrnehmung einer Umgebung mit einer bestimmten räumlichen Auflösung repräsentieren. Jedes Pixel erfasst insbesondere die Lichtintensität in einem bestimmten Bereich. Die Bilddaten liefern beispielsweise Informationen über Farben, Helligkeit, Texturen und die Ausdehnung von Objekten.

Eine Verwendung eines Maschinellen Lernsystems, das mit einer Ausführungsform des erfindungsgemäßen Verfahrens trainiert wurde, ist besonders vorteilhaft, da durch eine Verwendung der Raumbelegungsdaten als Referenzdaten zusätzliche Referenzdaten zur Verfügung stehen, die insbesondere für Bereiche mit wenigen Referenzdaten das Trainieren des Maschinellen Lernsystems verbessern können.

In einer besonders vorteilhaften Ausführung ist der Roboter insbesondere ein autonomes Fahrzeug, wobei basierend auf Ausgaben des Maschinelle Lernsystems, eine Längsbewegung und/ oder Querbewegung des autonomen Fahrzeugs gesteuert wird, insbesondere eine Abstandsregelung, Spurregelung und/oder automatische Notbremsung.

Autonome Fahrzeuge sind insbesondere Land-, Luft- und/ oder Wasserfahrzeuge, die sich selbstständig in ihrer Umgebung bewegen können. Autonome Fahrzeuge nutzen Sensordaten insbesondere zur Erfassung von Objekten, Spurmarkierungen und anderen Umgebungsinformationen.

Basierend auf generierten Prädiktionen des Maschinellen Lernsystems, die beispielsweise Positionen und Klassen von Objekten, Fahrbahnbegrenzungen oder den Bewegungen von Objekten beschreiben, werden Entscheidungen über die Längsbewegung und/oder Querbewegung des autonomen Fahrzeugs getroffen. Dies umfasst insbesondere Funktionen wie eine Abstandsregelung, die einen Abstand zu einem vorausfahrenden Fahrzeug reguliert, eine Spurregelung, die das autonome Fahrzeug innerhalb einer Fahrspur hält, und/oder eine automatische Notbremsung, die im Falle einer drohenden Kollision automatisch eine Notbremsung einleitet.

Insbesondere für das Trainieren Maschineller Lernsysteme für autonome Fahrzeuge ist eine große Anzahl von Referenzdaten wichtig, da durch das Maschinelle Lernsystem komplexe Umgebungen in verschiedenen Situationen korrekt erfasst und bewertet werden müssen, wobei durch die Verwendung der Raumbelegungsdaten als Referenzdaten zusätzliche Referenzdaten zur Verfügung stehen.

Nachfolgend wird ein Ausführungsbeispiel der vorliegenden Erfindung anhand der beiliegenden Zeichnung näher erläutert. Dabei zeigt:

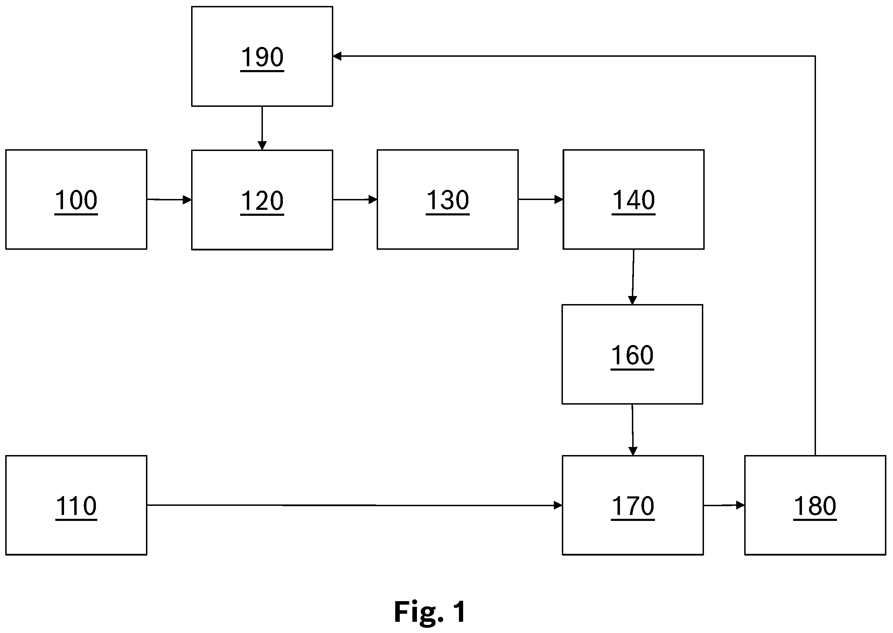

Fig. 1 zeigt eine schematische Darstellung einer Ausführungsform eines Trainings eines Maschinellen Lernsystems

### Ausführungsform der Erfindung

Fig. 1 zeigt beispielhaft eine schematische Darstellung einer Ausführungsform eines Trainings eines Maschinellen Lernsystems, unter Verwendung von Referenzdaten.

Zuerst werden Sensordaten (100) als Eingangsdaten eines Maschinelles Lernsystem (120) übergeben, wobei die Sensordaten insbesondere Lidardaten, Radardaten und/ oder Bilddaten sind.

Anschließend prädiziert das Maschinelle Lernsystem (120) basierend auf den Sensordaten (100) Prädiktionen (130) (beispielweise Objekte und/ oder Markierungen).

Die Prädiktionen (130) werden dann mittels einer Projektion (140) in einen Referenzraum von zugehörigen Referenzdaten (110) projiziert um Projizierte-Prädiktionen (160) zu erhalten, wobei die Referenzdaten Soll-Werte der Prädiktionen (130) für die Sensordaten (100) umfassen. Dabei sind die Referenzdaten (110) insbesondere Raumbelegungsdaten, die insbesondere einen von den Sensordaten erfassten Raum beschreiben. Die Projektion (140) kann dabei insbesondere eine Transformation von Koordinatensystem sowie Skalierungen umfassen.

Anschließend erfolgt eine Abbildung (170) der Projizierte-Prädiktionen (160) zu den Referenzdaten (110) dabei werden beispielsweise Objekte der Projizierten Prädiktionen (160) Instanzsegmentierungen und/ oder Semantischensegmentierungen der Referenzdaten (110) zugeordnet.

Basierend auf der Abbildung (170) wird ein Fehler (180) der Projizierte-Prädiktionen (160) zu den Referenzdaten (110) mittels einer Fehlerfunktion bestimmt. Dabei können insbesondere verschiedenen Referenzdatenarten in der Fehlerfunktion zusammengeführt werden. Ein Beispiel für eine Fehlerfunktion ist in Formel (1) beschrieben. ${F}_{total} = {\sum }_{i = 1}^{n} {α}_{i} {F}_{i}$ (1)

Dabei ist *Fₜₒₜₐₗ* der Fehler (180), der sich aus der Summe über *n* Teilfehler *Fᵢ*, Gewichtet durch Hyperparamter *αᵢ* ergibt. Wobei *n* insbesondere eine Anzahl verschiedener Referenzdatenarten ist und *Fᵢ* ein jeweiliger Teilfehler einer entsprechenden Referenzdatenart. Dabei können die Teilfehler je nach Referenzdatenart beispielsweise durch Intersection over Union, Dice Loss oder andere Methoden berechnet werden.

Basierend auf dem Fehler (180) erfolgt eine Optimierung (190) des Maschinellen Lernsystems (120) um den Fehler (180) zu minimieren. Das Training des Maschinellen Lernsystems kann iterativ entsprechend des beschriebenen Verfahrens wiederholt werden, bis der Fehler (180) unter einem vorbestimmten Schwellwert liegt.

## Patentansprüche

1. Computerimplementiertes Verfahren zum Trainieren eines Maschinellen Lernsystems (120), unter Verwendung von Referenzdaten (110) **dadurch gekennzeichnet, dass** die Referenzdaten (110) Raumbelegungsdaten umfassen, wobei die Raumbelegungsdaten eine Menge von Raumbelegungseinheiten umfassen, wobei das Maschinelle Lernsystem (120) basierend auf Eingangsdaten Prädiktionen (130) ausgibt, wobei die Eingangsdaten Sensordaten (100) sind, wobei die Prädiktionen (130) in einen Referenzraum der Raumbelegungsdaten projiziert werden um Projizierte-Prädiktionen (160) zu erhalten, wobei eine Abbildung (170) der Projizierten-Prädiktionen (160) auf die Raumbelegungsdaten erfolgt, wobei ein Fehler (180) der Projizierten-Prädiktionen (160) zu den Raumbelegungsdaten mittels einer Fehlerfunktion berechnet wird, wobei das Maschinelle Lernsystem basierend auf dem Fehler (180) optimiert wird.

2. Verfahren nach Anspruch 1, wobei die Fehlerfunktion ausgelegt ist, um Fehler von zumindest zwei Referenzdatenarten für eine Prädiktion zu berücksichtigen.

3. Verfahren nach einem der vorherigen Ansprüche, wobei die Referenzdaten (110) weitere Attribute umfassen, wobei die weiteren Attribute statische Attribute und/ oder dynamische Attribute umfassen, wobei die weiteren Attribute für die Abbildung (170) der Projizierte-Prädiktionen (160) zu den Raumbelegungsdaten genutzt werden.

4. Verfahren nach einem der vorhergehenden Ansprüche, wobei die Raumbelegungsdaten für jede Raumbelegungseinheit zumindest einen Vertrauenswert umfassen, der insbesondere eine Zuverlässigkeit der jeweiligen Raumbelegungseinheit angibt, und wobei Raumbelegungseinheiten, deren Vertrauenswert unterhalb eines vorbestimmten Schwellwerts liegt, für die Abbildung (170) der Projizierten Prädiktionen (160) mit den Raumbelegungsdaten ignoriert werden.

5. Verfahren nach einem der vorhergehenden Ansprüche, wobei der Fehler (180) der Projizierten-Prädiktionen (160) mit den Referenzdaten (110) mit zumindest einem Ähnlichkeitsmaß, insbesondere Intersection over Union oder Dice-Loss, bestimmt wird.

6. Verfahren nach einem der vorherigen Ansprüche, wobei der Referenzraum der Raumbelegungsdate gemäß einer Gitterstruktur aufgebaut ist, wobei die Gitterstruktur Gitterzellen umfasst, wobei jeder Gitterzelle zumindest eine Raumbelegungseinheit zugeordnet ist, wobei die Prädiktionen (140) auf die Gitterzellen projiziert werden.

7. Verfahren nach einem der vorherigen Ansprüche, wobei das Maschinelle Lernsystem (120) ein Multitask Netzwerk umfasst, wobei ein Teil des Multitask Netzwerks die Raumbelegungsdaten bestimmt, wobei zumindest ein zweiter Teil des Multitask Netzwerks unter Verwendung der Raumbelegungsdaten trainiert wird.

8. Verfahren nach einem der vorherigen Ansprüche, wobei die Prädiktionen (140) Polygone umfassen, wobei die Abbildung (170) der Projizierten-Prädiktionen (160) mit den Raumbelegungsdaten insbesondere basierend auf einer Erkennung von Änderungen in den Raumbelegungsdaten erfolgt.

9. Verwendung des Maschinellen Lernsystems, das mit dem Verfahren nach einem der Vorherigen Ansprüche trainiert wurde, um einen Roboter zu steuern, wobei die Sensordaten insbesondere Lidardaten, Radardaten und/ oder Bilddaten sind.

10. Verwendung nach Anspruch 8, wobei der Roboter insbesondere ein autonomes Fahrzeug ist, wobei basierend auf Ausgaben des Maschinelle Lernsystems, eine Längsbewegung und/ oder Querbewegung des autonomen Fahrzeugs gesteuert wird, insbesondere eine Abstandsregelung, Spurregelung und/oder automatische Notbremsung.

11. Vorrichtung, die eingerichtet ist, das Verfahren nach einem der Ansprüche 1 bis 10 auszuführen.

12. Computerprogramm, das eingerichtet ist, das Verfahren nach einem der Ansprüche 1 bis 10 auszuführen.

13. Maschinenlesbares Speichermedium, auf dem das Computerprogramm nach Anspruch 11 gespeichert ist.
